# EUROPEAN PATENT SPECIFICATION

(11) **EP 3 620 065 B1**
(45) Date of publication and mention of the grant of the patent: **07.04.2021**
(21) Application number: 19195395.9
(22) Date of filing: 04.09.2019
(51) Int. Cl.: A23L 29/20, A23L 29/256, A23L 29/281, A23L 7/109

(54) **PACKAGED PRODUCT FOR PREPARING PASTA IN BROTH AND PROCESS FOR PRODUCING SAID PACKAGED PRODUCT**
VERPACKTES PRODUKT ZUR HERSTELLUNG VON TEIGWAREN IN BRÜHE UND VERFAHREN ZUR HERSTELLUNG DES VERPACKTEN PRODUKTS
PRODUIT CONDITIONNÉ POUR LA PREPARATION DE PÂTES DANS UN BOUILLON ET PROCÉDÉ DE FABRICATION DUDIT PRODUIT CONDITIONNÉ

(30) Priority: 07.09.2018 IT 201800008435
(43) Date of publication of application: 11.03.2020
(73) Proprietor: Bondi, Giuseppe, 44124 Ferrara (FE) (IT)
(72) Inventor: Bondi, Giuseppe, 44124 Ferrara (FE) (IT)
(74) Representative: Caldon, Giuliano

(56) References cited:
- US-A- 3 281 248
- US-A- 4 876 104
- US-A- 5 332 587
- US-A- 5 599 573
- US-A1- 2006 099 316
- US-A1- 2009 047 390
- US-B1- 6 395 320

## Description

### Field of application

The object of the present invention is a packaged product for preparing pasta in broth and a process for producing said packaged product, according to the preamble of the relative independent claims.

The present packaged product is inserted in the food industry sector of pasta production, and is advantageously intended to be employed for preparing first courses of pasta in broth, in particular fresh pasta (such as tortellini, ravioli, cappelletti, etc.).

The present product is intended to be used at home and in dining establishments (such as bars, restaurants, etc.) and in hotels, and is adapted to be sold both through large-scale retail-trade and through circuits of the restaurant and hotel field.

### State of the art

Widespread on the market, in particular in the large-scale retail sector, are prepackaged pasta-based products containing a precooked and seasoned product (generally frozen) in order to allow a final user to prepare a plate of pasta in a few minutes.

Nevertheless, there is the particular need in the food industry sector to provide the final client (the private buyers as well as the restaurant and hotel managers) with products that allow even making pasta in broth dishes in a few minutes, in particular fresh stuffed pasta such as tortellini, ravioli, etc. On such matter, packaged products made of powder or gel are known on the market, intended to provide a base element in order to obtain the broth of the pasta, for example following the addition of boiling water. Such solutions of known type, nevertheless, require the user to separately buy the pasta to place in the broth, as well as to execute separate operations for preparing the broth before being able to put in the pasta. In addition, such solutions of known type do not allow obtaining a finished product having organoleptic properties that are fully satisfactory, in particular if compared with the taste and flavor of traditional fresh pasta.

For the purpose of at least partly resolving such drawbacks, prepackaged products have been recently introduced on the market which provide for arranging, within a same container, broth in gel form and a portion of fresh pasta, in a manner such to provide the final user with all the ingredients for making a pasta in broth first course.

However, also the latter solution of known type has in practice demonstrated that it does not lack drawbacks.

A first drawback is due to the fact that the pasta tends to sink within the gelatinous substance, therefore remaining in close contact with the latter for the entire time of preservation of the product (even multiple weeks) up until the consumer uses it. Consequently, the fresh pasta tends to absorb liquid components and humidity from the gel substance with consequent alteration of the characteristics of the pasta, in particular in terms of consistency and taste. More in detail, following the absorption of humidity, the dough of the pasta tends to be swollen, becoming excessively tender and soft. In this manner, when the product is cooked, the pasta tends to be easily broken and melted/disintegrated, in particular making the filling exit outward. The obtained cooked product has therefore poor qualities and unpleasant flavor, in particular not allowing the reproduction of the organoleptic characteristics of fresh pasta.

A further drawback is due to the fact that the absorption of humidity by the pasta facilitates the deterioration thereof in terms of preservation, involving expiration times for consumption that are particularly brief

US6395320B1 discloses a two-component packaged food product comprising a gelled aqueous sauce component and on top an oily food product composition containing pieces of vegetable, meat.

### Presentation of the invention

The problem underlying the present invention is therefore that of eliminating the drawbacks of the abovementioned prior art, by providing a packaged product for preparing pasta in broth which allows preparing, in a simple and rapid manner, a plate of pasta in broth which maintains integral the organoleptic properties of pasta, in particular of fresh pasta.

A further object of the present invention is to provide a packaged product for preparing pasta in broth which ensures optimal physical and organoleptic qualities of the broth of the plate prepared by means of said product.

A further object of the present invention is to provide a packaged product for preparing pasta in broth which ensures a relatively long preservation time without deterioration of the product.

A further object of the present invention is to provide a process for producing a packaged product which is simple to actuate and reliable.

### Brief description of the drawings

The technical characteristics of the invention, according to the aforesaid objects, are clearly found in the contents of the below-reported claims and the advantages thereof will be more evident in the following detailed description, made with reference to the enclosed drawings, which represent a merely exemplifying and non-limiting embodiment of the invention, in which:

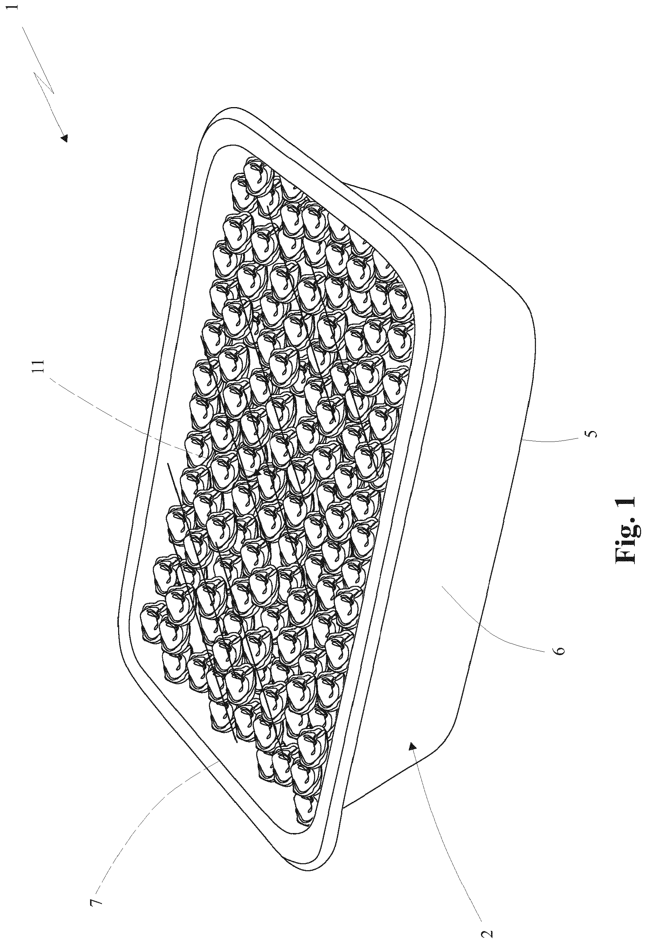

- figure 1 shows a top perspective view of the packaged product, object of the present invention;
- figure 2 shows a sectional side view of the packaged product illustrated in figure 1.

### Detailed description of a preferred embodiment

With reference to the enclosed drawings, reference number 1 overall indicates the packaged product for preparing pasta in broth, object of the present invention.

The present packaged product 1 is intended to be employed for preparing one or more pasta in broth dishes, both in home settings and in restaurants or hotels.

According to the invention, the packaged product 1 comprises a container 2 (such as a small jar or tray) provided with an internal volume 3 and with an upper opening 4 which allows accessing such internal volume 3.

In particular, the container 2 comprises a bottom wall 5 (preferably substantially flat, with shape that can be circular or polygonal), which on the lower part delimits the internal volume 3 of the container 2, and a side wall 6, which is projectingly extended from the edge of the bottom wall 5 in order to delimit the sides of the internal volume 3 itself. Advantageously, the side wall 6 of the container 2 is extended from the bottom wall 5 up to an upper edge 7 thereof which delimits the aforesaid upper opening 4, preferably arranged in front of the bottom wall 5.

In particular, the container 2 is made of material suitable for contact with foods (such as PET for foods) and preferably adapted to be employed in an oven or microwave oven.

The packaged product 1 also comprises a closure element 8 placed to close the upper opening 4 of the container 2, so as to prevent the food products contained at its interior (described in detail hereinbelow) from coming into contact with the outside environment before use of the packaged product 1 by the final consumer.

Preferably, the closure element 8 is placed in contact on the upper edge 7 of the container 2, in particular so as to sealingly close the upper opening 4 of the latter. For example, the closure element 8 comprises a cap or a film fixed on the upper edge 7 of the side wall 6 of the container 2 and can be, for example, made of transparent material (as in the example of the enclosed figures).

In accordance with a different embodiment of the invention, the closure element 8 comprises a closed package (e.g. a box or a bag) in which the entire container 2 is arranged.

According to the present invention, the packaged product 1 comprises a gelled substance 9, which comprises at least one food broth and at least one added thickener. The latter, in particular, is mixed with the food broth in order to maintain the gelled substance 9 in solid gel state at least at the preservation temperature of the packaged product 1 (before use), preferably at a refrigerator temperature, in particular comprised between about 0°C and 4°C.

The gelled substance 9 is arranged in the internal volume 3 of the container 2, occupying a corresponding zone thereof, being abutted in particular against the bottom wall 5 and extended up to a height of the side wall 6 below the upper edge 7 of the latter. The gelled substance 9 is provided with an upper surface 10 which delimits the extension volume thereof in the direction from the bottom wall 5 of the container 2 to the upper opening 4 of the latter. Such upper surface 10 is directed towards the upper opening 4 of the container 2 and is preferably positioned below the upper edge 7 of the side wall 6 of the container 2 itself.

In particular, the gelled substance 9 is extended for a specific height of the side wall 6 of the container 2 between the bottom wall of the latter and the upper surface 10 thereof, which preferably is substantially parallel to the bottom wall 5.

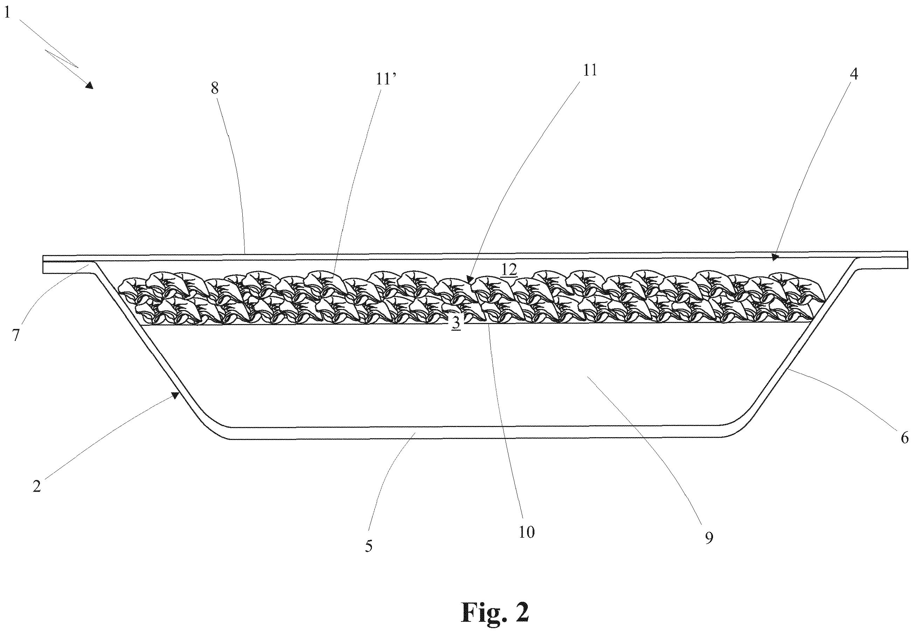

Advantageously, with reference to the example illustrated in figure 2, the gelled substance 9 is constituted by a single slice (or portion) abutted against the bottom wall 5 of the container 2.

In accordance with different non-illustrated embodiments, the gelled substance 9 can comprise multiple slices arranged on top of each other, or a plurality of granules or cubes (in the latter case the upper surface 10 of the gelled substance 9 is defined by the areas of the surfaces of the granules or cubes that face towards the upper opening 4 of the container 2). The packaged product 1 comprises a portion of broth pasta 11, arranged in the internal volume 3 of the container 2 between the closure element 8 and the upper surface 10 of the gelled substance 9.

In a per se conventional manner, the aforesaid portion of broth pasta 11 comprises multiple dough elements 11', which preferably can have shape and size corresponding to numerous pasta shapes, in particular stuffed pastas (such as tortellini, ravioli, cappelletti, etc.) or even simple pastas (such as tagliatelle, lasagna, etc.).

Advantageously, the aforesaid broth pasta 11 is fresh and uncooked pasta, for example prepared according to conventional techniques known in the reference sector.

In accordance with the idea underlying the present invention, the gelled substance 9 has a gel strength of value such to sustain the portion of broth pasta 11 abutted against the upper surface 10 of the gelled substance 9 itself, without the elements 11' of the portion of broth pasta 11 sinking within the gelled substance 9.

Such characteristic of the present invention allows maintaining the broth pasta 11 outside of the gelled substance 9, reducing to a minimum the contact surface between the elements 11' of the broth pasta 11 and the gelled substance 9 itself. Such effect prevents the broth pasta 11 from absorbing liquid components and humidity of the gelled substance 9, hence preventing the dough of such broth pasta 11 from being deteriorated, degraded or from losing its organoleptic characteristics. Consequently, the dough of the broth pasta 11, in particular in case of fresh pasta, does not absorb liquid components that can increase the volume thereof and reduce the consistency thereof, in a manner such that, during the cooking, the pasta is broken or melted/disintegrated or, in the case of stuffed pasta, the stuffing exits outward.

Therefore, the packaged product 1, object of the present invention, allows obtaining a pasta in broth dish in which, when the pasta is cooked, the latter maintains the organoleptic characteristics (in particular odor, color, taste and consistency) of fresh pasta.

In particular, the gel strength of the gelled substance 9 is substantially greater than or equal to the weight of the broth pasta 11 portion.

Advantageously, the gel strength of the gelled substance 9 has value greater than or equal to about 25 Bloom and, preferably to 26 Bloom. Such value has proven to be particularly suitable for ensuring that the gelled substance can sustain, on its upper surface 10, the types of fresh pasta produced in the food industry sector.

As is known, the Bloom index is a parameter indicative of the strength (or force) of the gel and, consequently, of the physical property tied to the solidity of the gel. Such parameter is obtained by means of a standardized process, per se known to the man skilled in the art, which provides for employing a measurement instrument provided with a cylindrical piston with 12.7 millimeter diameter in order to measure the weight (expressed in grams) required for lowering the surface of the gel by 4 millimeters. The value of the Bloom index is defined, according to the aforesaid standardized test, as the weight in grams required for the piston to lower the surface of the gel up to a depth of 4 millimeters in standard conditions.

In particular, the aforesaid values of the gel strength of the gelled substance 9 were determined at a measurement temperature of 16.4°C.

Advantageously, the gel strength of the gelled substance 9 is substantially comprised between 40 and 190 Bloom, and preferably between 45 and 185 Bloom.

Such range of values allows the gelled substance 9 to maintain the broth pasta 11 at the surface during the production and preservation of the packaged product 1 and to maintain, after the preparation of the dish, the cooked broth in liquid state, preventing for example the broth from becoming overly thick after cooking and thus ensuring the typical organoleptic properties of the broth.

Advantageously, the aforesaid range of the Bloom index allows the gelled substance 9 to sustain the portion of broth pasta 11 up to at least a 1/2 ratio of the weight of the broth pasta 11 portion with respect to the weight of the gelled substance 9 placed in the container 2 of the packaged product 1.

Preferably, the weight ratio between the portion of broth pasta 11 and the gelled substance 9 (contained in the container 2) is less than or equal to about 1/2, and preferably comprised between about 1/2 and 1/4.

For example, the weight of the gelled substance 9 in the container 2 can be comprised between 250 and 300 grams, and the weight of the portion of broth pasta 11 can be comprised between comprised between 85 and 115 grams.

As stated above, the gelled substance 9 contained in the container 2 comprises at least one food broth and at least one added thickener of food type.

In particular, the food broth can be vegetable broth or meat broth (e.g. chick or beef broth) and is maintained in a manner per se known to the man skilled in the art of the food field. For example, the food broth is obtained with water in which fresh vegetables are boiled (and in the case of meat broth, in which meat is boiled) and/or with the addition of salt, aromas, spices etcetera (in a conventional manner). Otherwise, the food broth can be obtained from granular broth.

Preferably, the added thickener is a thickener of food type, in particular contained in the taxonomic interval from E400 to E499 according to the classification published in the (EU) Regulations No. 1129/2011, e.g. food gelatin, Agar Agar, alginate-alginic acid. Advantageously, the added thickener has a percentage by weight, with respect to the food broth, substantially comprised between 0.5% and 5% and, preferably, substantially comprised between 3% and 4%.

In particular, the aforesaid concentrations of added thickener are to be considered in addition to possible other thickeners already present in the food broth before the additional thickener is admixed.

The aforesaid percentage range of the added thickener determines a solidity of the gelled substance 9 which leads to the gel strength necessary for sustaining the portion of broth pasta on the upper surface 10 during the preservation of the packaged product 1 (in particular at refrigerator temperatures). Simultaneously, such percentage range of the added thickener prevents the cooked broth from re-thickening after cooking (following normal cooling before being eaten), ensuring a suitable level of fluidity of the broth that is eaten. In addition, the aforesaid percentage of added thickener reduces (in particular at the preservation temperature in refrigerator of about 0-4°C) the tendency of the gelled substance 9 to release possible liquid components at its upper surface 10, hence further reducing the possibility of altering the dough of the broth pasta 11.

Hereinbelow, in Table 1, several embodiments of the gelled substance 9 of the packaged product 1 according to the present invention are reported by way of a non-limiting example, with the gel strength measured by means of standard Bloom test.

**Table 1**

| | **Composition [gr]** | **Gel strength [Bloom at 16.4°C]** |
|---|---|---|
| **Example 1** | Broth: 500 gr | 109 Bloom |
| | Food gelatin: 10.5 gr | |
| **Example 2** | Broth: 500 gr | 46.6 - 162 Bloom |
| | Agar Agar: 9 - 12 gr | |
| **Example 3** | Broth: 250 gr | 162 - 184 Bloom |
| | Alginate-alginic acid: 1.7 - 3.2 gr | |

With reference to the example illustrated in figure 2, the closure element 8 (which closes the upper opening 4 of the container 2) and the upper surface 10 of the gelled substance 9 delimit between them (within the internal volume 3 of the container 2) a chamber 12 which houses the portion of broth pasta 11 abutted against the upper surface 10 of the gelled substance 9 itself.

Advantageously, the aforesaid chamber 12 is filled with at least one inert gas, in a manner such to reduce to a minimum the possibilities of contamination of the broth pasta 11, further optimizing the preservation of the quality and organoleptic characteristics thereof.

Preferably, the aforesaid inert gas comprises at least one mixture of carbon dioxide and nitrogen (carbon-nitrogen).

The present packaged product allows preparing a fresh pasta in broth first course in a simple and quick manner, simultaneously ensuring organoleptic properties comparable to those of fresh pasta prepared in a conventional manner.

In particular, the packaged product 1 allows preparing the pasta dish both in a microwave oven and by means of cooking in a pot, preferably upon addition of a suitable quantity of water.

Also forming the object of the present invention is a process for producing a packaged product of the above-described type, regarding which the same nomenclature introduced up to now will be maintained hereinbelow for the sake of description simplicity.

The present process comprises a step of preparing a food broth in liquid state. For example, such preparation step can provide for the use of fresh products (such as vegetables, spices, salt, meat, etc. depending on the broth type) or it can provide for the use of granular broth.

Then, a step is provided for adding, to the liquid food broth, at least one added thickener, obtaining a liquid mixture of such food broth and such added thickener. In particular, this adding step provides for introducing the added thickener in the food broth when the latter is still hot and, preferably, provides for mixing the liquid food broth in a manner such to facilitate a substantially uniform distribution of the added thickener within the liquid food broth.

Advantageously, the quantity of added thickener, which is added to the broth, corresponds to a percentage by weight, with respect to the food broth, substantially comprised between 0.5% and 5% and, preferably, substantially comprised between 3% and 4%.

The present process then provides for a step of cooling the liquid mixture, generating a process of gelling of such liquid mixture in order to obtain a gelled substance 9, preferably having gel strength greater than or equal to about 25 Bloom (and in particular substantially between 40 and 190 Bloom, and preferably between 45 and 185 Bloom). The cooling step provides for bringing the liquid mixture below the solidification temperature (e.g. below 20°C) in a manner such that the molecules of the added thickener are bonded together in order to form a lattice that traps the liquid component of the food broth, forming the gelled substance 9.

Preferably, in the cooling step, the liquid mixture is brought to a temperature comprised between about 0°C and 4°C (in particular 3-4°C), e.g. by arranging the liquid mixture in a chiller or in a refrigerator.

A step is provided for packaging a dose of the gelled substance in the internal volume 3 of a container 2, in a manner such that the gelled substance 9 defines an upper surface 10 thereof arranged in front of the upper opening 4 of the container 2.

Preferably, such packaging step provides for metering the liquid mixture (of food broth and added thickener) into the container 2 before the aforesaid cooling step and subsequently subjecting the filled container 2 to such cooling step in order to determine the formation of the gelled substance 9 within the container 2 itself.

Otherwise, it is possible to cool the liquid mixture within a different recipient and subsequently arrange a dose of the obtained gelled substance 9 within the container 2.

The present process provides for a step of dispensing a portion of broth pasta 11 within the container 2. More in detail, such portion of broth pasta 11 is dispensed in the internal volume 3 of the container 2 through the upper opening 4 of the latter, in a manner such that the broth pasta 11 falls in abutment against the upper surface 10 of the gelled substance 9. The latter has gel strength greater than the weight of the portion of broth pasta 11, in a manner such to sustain such portion of broth pasta 11 abutted against the upper surface 10 of the gelled substance 9 without such portion of broth pasta 11 sinking within the gelled substance 9 itself.

Advantageously, a step is provided for introducing at least one inert gas (e.g. carbon-nitrogen) in the zone of the internal volume 3 of the container 2 between the upper surface 10 of the gelled substance 9 and the upper opening 4 of the container 2, in a manner such that, during the preservation of the packaged product, the broth pasta 11 remains in a controlled atmosphere.

The process provides for a step of closing the upper opening 4 of the container 2, preferably sealingly, by means of a closure element 8, such as a cap or a plastic film. The invention thus conceived therefore attains the pre-established objects.

## Claims

1. Packaged product (1) for preparing pasta in broth, which comprises:
- a container (2) provided with an internal volume (3) and with an upper opening (4) which allows accessing said internal volume (3);
- at least one closure element (8) placed to close said upper opening (4);
- a gelled substance (9), which contains at least one food broth and at least one added food thickener, is arranged in the internal volume (3) of said container (2) and is provided with an upper surface (10) directed towards the upper opening (4) of said container (2);
- a portion of broth pasta (11), arranged in the internal volume (3) of said container (2) between said closure element (8) and the upper surface (10) of said gelled substance (9);
said packaged product (1) being **characterized in that** said gelled substance (9) has a gel strength such to sustain said portion of pasta (11) abutted against the upper surface (10) of said gelled substance (9).

2. Packaged product (1) according to claim 1, **characterized in that** the gel strength of said gelled substance (9) is greater than or equal to about 25 Bloom.

3. Packaged product (1) according to claim 2, **characterized in that** the gel strength of said gelled substance (9) is substantially comprised between 40 and 190 Bloom.

4. Packaged product (1) according to any one of the preceding claims, **characterized in that** said at least one added thickener has a percentage by weight, with respect to said food broth, substantially comprised between 0.5% and 5%.

5. Packaged product (1) according to claim 4, **characterized in that** said at least one added thickener has a percentage by weight, with respect to said food broth, substantially comprised between 3% and 4%.

6. Packaged product (1) according to any one of the preceding claims, **characterized in that** the weight ratio between said portion of pasta (11) and said gelled substance (9) is less than or equal to about 1/2.

7. Packaged product (1) according to any one of the preceding claims, **characterized in that** said closure element (8) and the upper surface (10) of said gelled substance (9) delimit between them, in the internal volume (3) of said container (2), a chamber (12) which houses said portion of pasta (11) and is filled with at least one inert gas.

8. Packaged product (1) according to any one of the preceding claims, **characterized in that** said at least one thickener comprises one or more thickeners comprised in the taxonomic interval from E400 to E499 according to the classification published in the (EU) Regulations No. 1129/2011.

9. Packaged product (1) according to any one of the preceding claims, **characterized in that** said pasta (11) is fresh and uncooked pasta.

10. Process for producing a packaged product (1) according to any one of the preceding claims, **characterized in that** it comprises the following operating steps:
- a step of preparing a food broth in liquid state;
- a step of adding, to said food broth, at least one added thickener, obtaining a liquid mixture;
- a step of cooling said liquid mixture, generating a process of gelling said liquid mixture in order to obtain a gelled substance (9);
- a step of packaging a dose of said gelled substance (9) within an internal volume (3) of a container (2) provided with an upper opening (4), wherein said gelled substance (9) defines an upper surface (10) thereof arranged in front of said upper opening (4);
- a step of dispensing a portion of broth pasta (11) in said container (2), wherein said portion of pasta (11) is dispensed within the internal volume (3) of said container (2) through said upper opening (4), and is abutted against the upper surface (10) of said gelled substance (9), which has gel strength such to sustain said portion of pasta (11) abutted against said upper surface (10) without said portion of pasta (11) sinking within said gelled substance (9);
- a step of closing the upper opening (4) of said container (2) by means of a closure element (8).

## Patentansprüche

1. Verpacktes Produkt zur Herstellung von Teigwaren in Brühe, das Folgendes umfasst:
- einen Behälter (2) mit einem Innenvolumen (3) und einer oberen Öffnung (4), die den Zugang zu dem genannten Innenvolumen (3) gestattet;
- mindestens ein Verschlusselement (8), das zum Verschließen der genannten oberen Öffnung (4) platziert ist;
- eine gelierte Substanz (9), die mindestens eine Brühe und mindestens ein zugesetztes Verdickungsmittel enthält, in dem Innenvolumen (3) des genannten Behälters (2) angeordnet ist und eine zu der oberen Öffnung (4) des genannten Behälters (2) gerichtete Oberseite (10) aufweist;
- eine Portion Teigwaren für Brühe (11), die in dem Innenvolumen (3) des genannten Behälters (2) zwischen dem genannten Verschlusselement (8) und der Oberseite (10) der genannten gelierten Substanz (9) angeordnet ist;
wobei das genannte verpackte Produkt (1) **dadurch gekennzeichnet ist dass** die genannte gelierte Substanz (9) eine Gallertfestigkeit aufweist, um die genannte Portion Teigwaren (11) an die Oberseite (10) der genannten gelierten Substanz (9) angrenzend zu halten.

2. Verpacktes Produkt (1) nach Anspruch 1, **dadurch gekennzeichnet dass** die Gallertfestigkeit der genannten gelierten Substanz (9) ca. 25 Bloom oder mehr beträgt.

3. Verpacktes Produkt (1) nach Anspruch 2, **dadurch gekennzeichnet dass** die Gallertfestigkeit der genannten gelierten Substanz (9) im Wesentlichen zwischen 40 und 190 Bloom liegt.

4. Verpacktes Produkt (1) nach einem beliebigen der vorangegangenen Ansprüche, **dadurch gekennzeichnet, dass** das genannte mindestens eine zugesetzte Verdickungsmittel einen Gewichtsanteil im Verhältnis zu der genannten Brühe aufweist, der im Wesentlichen zwischen 0,5 % und 5 % beträgt.

5. Verpacktes Produkt (1) nach Anspruch 4, **dadurch gekennzeichnet, dass** das genannte mindestens eine zugesetzte Verdickungsmittel einen Gewichtsanteil im Verhältnis zu der genannten Brühe aufweist, der im Wesentlichen zwischen 3 % und 4 % beträgt.

6. Verpacktes Produkt (1) nach einem beliebigen der vorangegangenen Ansprüche, **dadurch gekennzeichnet, dass** das Gewichtsverhältnis zwischen der genannten Portion Teigwaren (11) und der genannten gelierten Substanz (9) bei 1 zu 2 oder weniger liegt.

7. Verpacktes Produkt (1) nach einem beliebigen der vorangegangenen Ansprüche **dadurch gekennzeichnet, dass** das genannte Verschlusselement (8) und die Oberseite (10) der genannten gelierten Substanz (9) zwischen sich in dem Innenvolumen (3) des genannten Behälters (2) eine Kammer (12) begrenzen, in der die genannte Portion Teigwaren (11) untergebracht ist, die mit mindestens einem inerten Gas gefüllt ist.

8. Verpacktes Produkt (1) nach einem beliebigen der vorangegangenen Ansprüche, **dadurch gekennzeichnet, dass** das genannte mindestens eine Verdickungsmittel ein oder mehrere Verdickungsmittel umfasst, die der Taxonomie nach gemäß der in Verordnung (EU) Nr. 1129/2011 veröffentlichten Klassifizierung im Bereich E400 bis E499 liegen.

9. Verpacktes Produkt (1) nach einem beliebigen der vorangegangenen Ansprüche, **dadurch gekennzeichnet, dass** es sich bei den genannten Teigwaren (11) um frische und ungekochte Teigwaren handelt.

10. Verfahren zur Herstellung eines verpackten Produkts (1) nach einem beliebigen der vorangegangenen Ansprüche, **dadurch gekennzeichnet, dass** es die folgenden Arbeitsschritte umfasst:
- einen Schritt der Zubereitung einer Brühe in flüssigem Zustand;
- einen Schritt des Hinzufügens mindestens eines der genannten Brühe zugesetzten Verdickungsmittels zum Erzielen einer flüssigen Mischung;
- einen Schritt des Abkühlens der genannten flüssigen Mischung, so dass ein Prozess des Gelierens der genannten flüssigen Mischung einsetzt, um eine gelierte Substanz (9) zu erhalten;
- einen Schritt des Verpackens einer Dosis der genannten gelierten Substanz (9) in einem Innenvolumen (3) eines mit einer oberen Öffnung (4) ausgestatteten Behälters (2), in dem die genannte gelierte Substanz (9) eine Oberseite (10) derselben definiert, die vor der genannten oberen Öffnung (4) angeordnet ist;
- einen Schritt des Verteilens einer Portion von Teigwaren für Brühe (11) in dem genannten Behälter (2), bei dem die genannte Portion Teigwaren (11) in dem Innenvolumen (3) des genannten Behälters (2) über die obere Öffnung (4) verteilt wird und so an die Oberseite (10) der genannten gelierten Substanz (9) angrenzt, die eine Gallertfestigkeit aufweist, die geeignet ist, die genannten Portion Teigwaren (11) an die Oberseite (10) angrenzend zu halten, ohne das die genannte Portion Teigwaren (11) in die genannte gelierte Substanz (9) einsinkt;
- einen Schritt des Verschließens der oberen Öffnung (4) des genannten Behälters (2) mittels eines Verschlusselements (8).

## Revendications

1. Produit conditionné (1) pour la préparation de pâtes dans un bouillon, lequel comprend :
- un récipient (2) muni d'un volume interne (3) et d'une ouverture supérieure (4) qui permet l'accès audit volume interne (3) ;
- au moins un élément de fermeture (8) positionné pour fermer ladite ouverture supérieure (4) ;
- une substance gélifiée (9), laquelle contient au moins un bouillon alimentaire et au moins un épaississant alimentaire ajouté, est disposée dans le volume interne (3) dudit récipient (2) et est munie d'une surface supérieure (10) orientée vers l'ouverture supérieure (4) dudit récipient (2) ;
- une partie des pâtes à bouillon (11), disposée dans le volume interne (3) dudit récipient (2) entre ledit élément de fermeture (8) et la surface supérieure (10) de ladite substance gélifiée (9) ;
ledit produit conditionné (1) étant **caractérisé en ce que** ladite substance gélifiée (9) a une force en gelée telle qu'elle soutient ladite partie des pâtes (11) en appui contre la surface supérieure (10) de ladite substance gélifiée (9).

2. Produit conditionné (1) selon la revendication 1, **caractérisée en ce que** la force en gelée de ladite substance gélifiée (9) est supérieure à ou égale à environ 25 Bloom.

3. Produit conditionné (1) selon la revendication 2, **caractérisée en ce que** la force en gelée de ladite substance gélifiée (9) est sensiblement comprise entre 40 et 190 Bloom.

4. Produit conditionné (1) selon l'une quelconque des revendications précédentes, **caractérisé en ce que** ledit au moins un épaississant ajouté a un pourcentage en poids, par rapport audit bouillon alimentaire, sensiblement compris entre 0,5 % et 5 %.

5. Produit conditionné (1) selon la revendication 4, **caractérisé en ce que** ledit au moins un épaississant ajouté a un pourcentage en poids, par rapport audit bouillon alimentaire, sensiblement compris entre 3 % et 4 %.

6. Produit conditionné (1) selon l'une quelconque des revendications précédentes, **caractérisé en ce que** le rapport en poids entre ladite partie des pâtes (11) et ladite substance gélifiée (9) est inférieur à ou égal à environ ½.

7. Produit conditionné (1) selon l'une quelconque des précédentes revendications, **caractérisé en ce que** ledit élément de fermeture (8) et la surface supérieure (10) de ladite substance gélifiée (9) délimitent entre eux, dans le volume interne (3) dudit récipient (2), une chambre (12) qui loge ladite partie des pâtes (11) et est remplie d'au moins un gaz inerte.

8. Produit conditionné (1) selon l'une quelconque des revendications précédentes, **caractérisé en ce que** ledit au moins un épaississant comprend un ou plusieurs épaississants compris dans l'écart taxonomique de E400 à E499 selon la classification publiée dans le Règlement (UE) n° 1129/2011.

9. Produit conditionné (1) selon l'une quelconque des revendications précédentes, **caractérisé en ce que** lesdites pâtes (11) sont des pâtes fraîches et crues.

10. Procédé pour la fabrication d'un produit conditionné (1) selon l'une quelconque des revendications précédentes, **caractérisé en ce qu'**il comprend les étapes opérationnelles suivantes :
- une étape consistant à préparer un bouillon alimentaire dans un état liquide,
- une étape consistant à ajouter, audit bouillon alimentaire, au moins un épaississant ajouté, obtenant un mélange liquide ;
- une étape consistant à refroidir ledit mélange liquide, réalisant un procédé consistant à gélifier ledit mélange liquide afin d'obtenir une substance gélifiée (9) ;
- une étape consistant à conditionner une dose de ladite substance gélifiée (9) à l'intérieur d'un volume interne (3) d'un récipient (2) muni d'une ouverture supérieure (4), dans laquelle ladite substance gélifiée (9) définit une surface supérieure (10) de celui-ci disposée en face de ladite ouverture supérieure (4) ;
- une étape consistant à verser une partie des pâtes à bouillon (11) dans ledit récipient (2), dans laquelle ladite partie des pâtes (11) est versée à l'intérieur du volume interne (3) dudit récipient (2) à travers ladite ouverture supérieure (4), et est en appui contre la surface supérieure (10) de ladite substance gélifiée (9), laquelle a une force en gelée telle qu'elle soutient ladite partie des pâtes (11) en appui contre ladite surface supérieure (10) sans que ladite partie des pâtes (11) ne s'enfonce à l'intérieur de ladite substance gélifiée (9) ;
- une étape consistant à fermer l'ouverture supérieure (4) dudit récipient (2) au moyen d'un élément de fermeture (8).
